# EUROPÄISCHE PATENTSCHRIFT

(11) **EP 3 137 869 B1**
(45) Veröffentlichungstag und Bekanntmachung des Hinweises auf die Patenterteilung: **16.05.2018**
(21) Anmeldenummer: 15710454.8
(22) Anmeldetag: 05.03.2015
(51) Int. Cl.: G01M 3/02, B65B 3/00

(54) **VORRICHTUNG UND VERFAHREN ZUR ÜBERPRÜFUNG EINER DICHTIGKEIT VON STERILEN BAUGRUPPEN**
APPARATUS AND METHOD FOR LEAK TESTING OF A STERILE UNIT
DISPOSITIF ET PROCÉDÉ POUR TESTER DES FUITES DANS UN ELEMENT STÉRILE

(30) Priorität: 28.04.2014 DE 102014207933
(43) Veröffentlichungstag der Anmeldung: 08.03.2017
(73) Patentinhaber: Robert Bosch GmbH, 70442 Stuttgart (DE)
(72) Erfinder: KUCHENBROD, Michael, 74549 Wolpertshausen (DE); BRAEUNINGER, Marc, 74589 Satteldorf (DE); KAUDER, Florian, 91611 Lehrberg (DE); HOLEY, Daniel, 74589 Satteldorf (DE)
(86) Internationale Anmeldenummer: PCT/EP2015/054670
(87) Internationale Veröffentlichungsnummer: WO 2015/165624

(56) Entgegenhaltungen:
- WO-A1-2009/100428
- DE-A1-102009 040 286
- DE-A1-102012 212 527

## Beschreibung

### Stand der Technik

Die vorliegende Erfindung betrifft eine Vorrichtung und ein Verfahren zur Überprüfung einer Dichtigkeit einer sterilen Baugruppe.

Beispielsweise werden im medizinischen und/oder pharmazeutischen Bereich sterile Flüssigkeiten, welche in einem großen Beutel bevorratet sind, mittels einer Dosiervorrichtung in kleinere Behältnisse steril abgefüllt werden. Hierbei wird der Beutel in die Dosiervorrichtung eingelegt und vor dem Abfüllen in die kleineren Behältnisse durch einen Sterilfilter geführt. Hierdurch wird die Sterilität der sterilen Flüssigkeit auch in den kleinen Behältnissen sichergestellt. Es ist ferner bekannt, Flüssigkeiten, welche in einem Beutel angeordnet sind, mittels eines externen Geräts hinsichtlich einer möglichen Leckage zu untersuchen. Dies wird bisher jedoch im sterilen Bereich mit sterilen Flüssigkeiten nicht angewandt, da bei derartigen Tests die Gefahr besteht, dass die Sterilität des Beutels nicht beibehalten werden kann bzw. eine Kontamination stattfinden kann. Bei sterilen Flüssigkeiten wird dies insbesondere deshalb vermieden, da zusätzlich Montagefehler durch den separaten Leckagetest auftreten können, welche zu Kontaminationen führen können. Auch ist ein zusätzliches Handling vom separaten Leckagetestgerät zur Dosiervorrichtung notwendig, wobei ebenfalls Beschädigungen oder Kontaminationen des Beutels auftreten können. Bei toxischen Flüssigkeiten ergeben sich zudem zusätzliche Gefährdungsmöglichkeiten für die handhabenden Personen. Weiterhin besteht bei Sterilabfüllungen die Gefahr, dass beispielsweise eine Abgabeleitung, über welche die sterile Flüssigkeit vom Beutel zum kleinen Behältnis geführt wird, nicht steril ist.

Von daher wäre es wünschenswert, eine Dosiervorrichtung sowie ein Verfahren zum Überprüfen von sterilen Bauteilen zu haben, bei denen möglichst keine Handhabungsfehler und/oder Kontaminationsmöglichkeiten vorhanden sind.

### Offenbarung der Erfindung

Das erfindungsgemäße Verfahren zur Überprüfung einer Dichtigkeit einer sterilen Baugruppe mit den Merkmalen des Anspruchs 1 weist demgegenüber den Vorteil auf, dass die Dichtigkeit in der eigentlichen Dosiervorrichtung überprüft werden kann. Hierdurch ist die Gefahr einer Kontamination von Bedienpersonal und die Gefahr von Kontamination des sterilen Produkts während der Handhabungsvorgänge minimiert. Dies wird erfindungsgemäß dadurch erreicht, dass die sterile Baugruppe zuerst in die eigentliche Dosiervorrichtung zum Dosieren des sterilen Fluids montiert wird. Anschließend wird eine Verbindung zwischen einem mit dem sterilen Fluid gefüllten Speicherbehälter und einer Drucktesteinrichtung hergestellt und gleichzeitig alle anderen Verbindungen zum Speicherbehälter unterbrochen bzw. abgesperrt. Die Drucktesteinrichtung umfasst ein Drucktestmedium, welches dann nach Öffnen einer Verbindung zwischen dem Drucktestmedium und dem Speicherbehälter den Inhalt des Speicherbehälters für einen vorbestimmten Zeitraum unter Druck setzt. Hierdurch kann der Speicherbehälter auf eine Leckage überprüft werden. Erfindungsgemäß wird das Drucktestmedium vor einem Einströmen in den Speicherbehälter durch ein Filterelement, insbesondere ein steriles Filterelement, geführt.

Die Unteransprüche zeigen bevorzugte Weiterbildungen der Erfindung.

Vorzugsweise ist das Drucktestmedium ein Gas, insbesondere ein Inertgas. Hierdurch wird eine Kontamination der sterilen Flüssigkeit beim Drucktest vermieden.

Eine Verkürzung einer gesamten Handhabungsdauer des Abfüllvorgangs ergibt sich dadurch, dass vorzugsweise unmittelbar nach Abschluss der Überprüfung der Dichtigkeit ein Dosiervorgang ausgeführt wird. Der Dosiervorgang wird dabei nur dann ausgeführt, wenn bei der Dichtigkeitsüberprüfung keine Undichtigkeit
festgestellt wurde. Sollte eine Undichtigkeit festgestellt worden sein, wird der Speicherbehälter ausgetauscht.

Besonders bevorzugt ist das auf das sterile Fluid ausgeübte Druckniveau während der Dichtigkeitsüberprüfung größer als ein Druckniveau während eines nachfolgenden Abfüllvorgangs.

Besonders bevorzugt ist der Speicherbehälter ein Beutel. Die Verwendung eines Beutels als Speicherbehälter ermöglicht eine besonders einfache und genaue Dosierung der sterilen Flüssigkeit.

Vorzugsweise umfasst die sterile Baugruppe neben dem Speicherbehälter mit der sterilen Flüssigkeit noch eine Abgabeleitung, z. B. einen Schlauch, und eine Nadel oder dergleichen, welche zur Dosierung verwendet wird. Ferner ist bevorzugt in der Abgabeleitung noch eine Schlauchpumpe vorgesehen. Weiter bevorzugt ist auch ein Verteiler einem Abgabeanschluss nachgeschaltet. Diese vorhergehend genannten Bauteile bilden bevorzugt eine sterile Unter-Baugruppe, welche nach dem Abfüllvorgang vollständig entsorgt wird. Durch die Verwendung dieser sterilen Unter-Baugruppe kann somit verhindert werden, dass eine Kontamination des sterilen Inhalts des Speicherbehälters auf dem Weg vom Speicherbehälter zum kleinen Behältnis erfolgt. Erfindungsgemäß umfasst die sterile Baugruppe somit bevorzugt den Speicherbehälter, in welchem die sterile Flüssigkeit gespeichert ist, sowie sämtliche, dem Speicherbehälter bis zur Abgabe der sterilen Flüssigkeit nachfolgenden Bauteile, wie Abströmleitungen, Verteiler, Schlauchpumpe, Nadel oder dergleichen.

Die erfindungsgemäße Dosiervorrichtung zum Dosieren eines sterilen Fluids umfasst vorzugsweise eine Aufnahmevorrichtung zum Aufnehmen einer sterilen Baugruppe, welche wenigstens einen Speicherbehälter mit einem Zuströmanschluss und einem Abgabeanschluss umfasst, wobei die sterile Flüssigkeit im Speicherbehälter angeordnet ist. Ferner umfasst die erfindungsgemäße Dosiervorrichtung eine integrierte Drucktestvorrichtung, welcher über den Zuströmanschluss mit dem Speicherbehälter verbindbar ist. Die Drucktestvorrichtung ist dabei eingerichtet, eine Druckhalteprüfung (Dichtigkeitstest) zur Überprüfung einer Dichtigkeit des Speicherbehälters durchzuführen. Ferner umfasst die erfindungsgemäße Dosiervorrichtung ein Filterelement, durch dass das Drucktestmedium vor Einströmen in den Speicherbehälter geführt wird. Somit kann erfindungsgemäße die sterile Baugruppe in die

Dosiervorrichtung montiert werden und nach Durchführen der Dichtigkeitsprüfung sofort mit einem Abfüllvorgang begonnen werden.

Vorzugsweise umfasst die sterile Baugruppe ferner einen Verteiler mit einer Vielzahl von Fluidausgängen und eine Vielzahl von Dosiereinheiten. Jede der Dosiereinheiten umfasst wenigstens eine Leitung und eine Nadel am Ende der Leitung. Die Dosiereinheiten sind dabei an den Fluidausgängen angeordnet. Dadurch wird eine komplette sterile Unter-Baugruppe bereitgestellt, die eine Sterilität, ausgehend vom Speicherbehälter über alle nachfolgenden Bauteile bis zum Abfüllpunkt an der Nadel bereitstellt. Vorzugsweise ist in der Leitung zusätzlich noch eine Schlauchpumpe vorgesehen.

Weiter bevorzugt umfasst die Dosiervorrichtung ferner eine Absperreinrichtung, welche eingerichtet ist, die sterile Baugruppe an einem Abgabepfad, vorzugsweise an einer Leitung der Dosiereinheit, abzusperren. Die Absperreinrichtung ist beispielsweise eine Schlauchquetsche.

Vorzugsweise umfasst die Dosiervorrichtung ferner ein mit einem Abfülldruckmedium gefülltes Reservoir, welches mit dem Zuströmanschluss verbindbar ist. Das Reservoir ist vorzugsweise über eine Zuströmleitung mit dem Zuströmanschluss verbunden, wobei auch die Drucktestvorrichtung in die Zuströmleitung mündet. Vorzugsweise sind dabei Absperreinrichtungen in den jeweiligen Zuleitungen zur gemeinsamen Zuströmleitung vom Reservoir bzw. von der Drucktestvorrichtung vorgesehen.

Die Erfindung wird vorzugsweise bei Füllmaschinen im Reinraumbereich zur Abfüllung von medizinischen und/oder pharmazeutischen Produkten verwendet.

### Zeichnung

Nachfolgend wird ein bevorzugtes Ausführungsbeispiel der Erfindung unter Bezugnahme auf die begleitende Zeichnung im Detail beschrieben. In der Zeichnung ist:

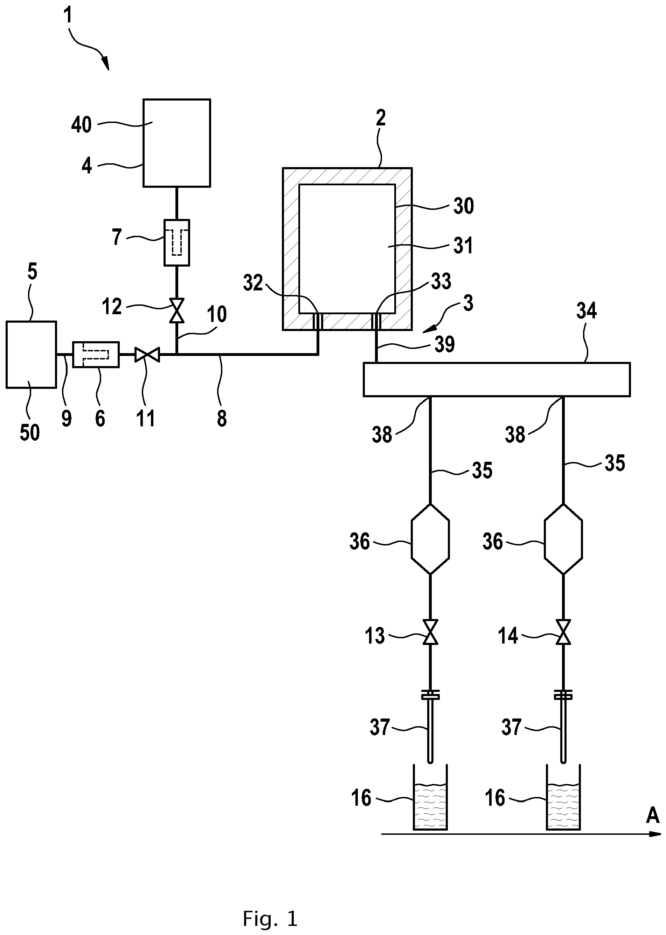

- Figur 1: eine schematische Darstellung einer Dosiervorrichtung gemäß einem bevorzugten Ausführungsbeispiel der Erfindung.

### Bevorzugte Ausführungsform der Erfindung

Nachfolgend wird unter Bezugnahme auf die Figur 1 eine Dosiervorrichtung 1 gemäß einem bevorzugten Ausführungsbeispiel der Erfindung im Detail beschrieben.

Wie aus Figur 1 ersichtlich ist, umfasst die Dosiervorrichtung 1 eine Aufnahmevorrichtung 2 zur Aufnahme eines Speicherbehälters 3.

Der Speicherbehälter 3 ist ein Beutel, in welchem ein steriles Fluid angeordnet ist. Eine sterile Baugruppe 3 umfasst den Speicherbehälter 30, einen Verteiler 34 und eine Vielzahl von Dosiereinheiten (in Figur 2 sind nur zwei Dosiereinheiten schematisch dargestellt), welche jeweils einen Schlauch 35, eine Schlauchpumpe 36 und eine Nadel 37 umfassen. Der Verteiler 34 umfasst dabei eine Vielzahl von Fluidausgängen 38, an denen jeweils eine Dosiereinheit angeordnet ist. Am Speicherbehälter 30 ist ferner ein Zuströmanschluss 32 und ein Abgabeanschluss 33 vorgesehen. Der Abgabeanschluss 33 ist über eine Leitung 39 mit dem Verteiler 34 verbunden.

Die Dosiervorrichtung 1 umfasst ferner ein Reservoir 5, in welchem ein Abfülldruckmedium 50 angeordnet ist. Das Reservoir 5 ist über eine erste Zuleitung 9 und eine gemeinsame Zuströmleitung 8 mit dem Zuströmanschluss 32 verbunden.

Ferner umfasst die Dosiervorrichtung 1 eine Drucktestvorrichtung 4, in welcher ein Drucktestmedium 40, insbesondere ein steriles Gas, angeordnet ist. Die Drucktestvorrichtung 4 ist über eine zweite Zuleitung 10 mit der gemeinsamen Zuströmleitung 8 und damit mit dem Zuströmanschluss 32 des Speicherbehälters 30 verbunden.

In der ersten Zuleitung 9 ist ein erster Filter 6 und in der zweiten Zuleitung 10 ein zweiter Filter 7 angeordnet.

Die Dosiervorrichtung 1 umfasst ferner eine erste Absperreinrichtung 11, welche in der ersten Zuleitung 9 angeordnet ist, und eine zweite Absperreinrichtung 12, welche in der zweiten Zuleitung 10 angeordnet ist. Eine dritte und eine vierte Absperreinrichtung 13, 14 ist in jedem der Schläuche 35 der Dosiereinheiten vorgesehen. Die Absperreinrichtungen sind beispielsweise Schlauchquetschen und können die jeweiligen Leitungen einzeln absperren bzw. freigeben. Die Absperreinrichtungen 11, 12, 13, 14 werden bevorzugt von einer zentralen Steuereinheit (nicht dargestellt) angesteuert. Es sei ferner angemerkt, dass die dritten und vierten Absperreinrichtungen 13, 14 auch in die Nadel integriert sein können.

Bei diesem Ausführungsbeispiel umfasst die sterile Baugruppe 3 demnach eine Vielzahl von Bauteilen, so dass das sterile Fluid 31, ausgehend vom Speicherbehälter 30, immer nur über sterile Bauteile bis zur Nadel 37 strömen kann. Die sterile Baugruppe 3 ist dabei als Einweg-Bauteil vorgesehen, d.h., wird nach Gebrauch vollständig entsorgt.

Die Dosierung des sterilen Fluids 31 erfolgt dabei, wie in Figur 1 schematisch angedeutet, in kleinere Behältnisse 16, welche, wie durch den Pfeil A angedeutet, in dieser Richtung zur Dosiervorrichtung 1 zugeführt, befüllt und anschließend abgeführt werden können. Die Dosiervorrichtung 1 kann dabei bevorzugt in einem Reinraum betrieben werden.

Erfindungsgemäß kann an der sterilen Baugruppe 3 nun im in die Dosiervorrichtung 1 eingelegten Zustand eine Dichtigkeitsprüfung durchgeführt werden. Nachdem der Speicherbehälter 30 in der Aufnahmevorrichtung 2 angeordnet wurde und der Zuströmungsanschluss 32 an die gemeinsame Zuströmleitung 8 angeschlossen wurde, kann in einem ersten Schritt die Dichtigkeitsüberprüfung durchgeführt werden. Hierzu wird die erste Absperreinrichtung 11 in der ersten Zuleitung 9 verschlossen und die zweite Absperreinrichtung 12 in der zweiten Zuleitung 10 geöffnet. Dadurch ist eine Fluidkommunikation zwischen der Drucktestvorrichtung 4 und dem Speicherbehälter 3 über die zweite Zuleitung 10 und die gemeinsame Zuströmleitung 8 möglich. Ferner werden die dritte und vierte Absperreinrichtung 13, 14 geschlossen. Das sterile Fluid 31 wird somit mit dem Drucktestmedium 40 beaufschlagt und die Dichtigkeitsprüfung des Speicherbehälters 30 kann im montierten Zustand in der Aufnahmevorrichtung durchgeführt werden.

Somit steigt der Druck im Speicherbehälter 30 an und es kann überprüft werden, ob der Speicherbehälter 30 oder die dem Speicherbehälter 30 nachgeordneten Bauteile Ausgangsleitung 39, Verteiler 34, Schlauch 35 oder Schlauchpumpe 36, ein Leck aufweisen.

Wenn keine Leckage an der sterilen Baugruppe 3 auftritt, kann die Druckprüfung beendet werden und direkt eine Abfüllung der Behältnisse 16 begonnen werden. Hierzu wird die zweite Absperreinrichtung 12 verschlossen und die erste Absperreinrichtung 11 sowie die dritte und vierte Absperreinrichtung 13, 14 geöffnet. Dadurch ist eine Fluidkommunikation zwischen dem Reservoir 5 und dem Speicherbehälter 30 über die erste Zuleitung 9 und die gemeinsame Zuströmleitung 8 möglich. Dadurch wird das sterile Fluid 3 im Speicherbehälter 30 unter Druck gesetzt, so dass eine Abfüllung über den Verteiler 34 und die Dosiereinheiten in die Behältnisse 16 ermöglicht wird.

Erfindungsgemäß ist es somit zum ersten Mal möglich, dass eine komplette sterile Baugruppe 3 im montierten Zustand in der Dosiervorrichtung 1 hinsichtlich ihrer Dichtigkeit geprüft werden kann. Die Dichtigkeitsprüfung erfolgt somit nicht auf einer externen Einrichtung, sondern direkt in der Dosiervorrichtung 1. Nach erfolgreicher Dichtigkeitsprüfung kann dann sofort mit einer Abfüllung begonnen werden. Hierdurch wird die Gefahr einer Beschädigung oder Kontamination von sterilen Produkten, welche aus großen Gebinden in kleinere Gebinde umgefüllt werden müssen, deutlich reduziert. Auch wird eine Gesamtabfüllzeit mit Dichtigkeitsüberprüfung signifikant reduziert. Weiterhin ist erfindungsgemäß keine Abhängigkeit hinsichtlich einer Reinraumklasse vorhanden, da es sich beim Überprüfen der Dichtigkeit um ein komplett geschlossenes System handelt.

## Patentansprüche

1. Verfahren zur Überprüfung einer Dichtigkeit einer sterilen Baugruppe (3), welche wenigstens einen mit einem sterilen Fluid (31) gefüllten Speicherbehälter (30) mit einem Zuströmanschluss (32) und einem Abgabeanschluss (33) umfasst, umfassend die Schritte:
- Montieren der sterilen Baugruppe (3) in einer Dosiervorrichtung (1) zum Dosieren des sterilen Fluids (31), wobei die Dosiervorrichtung (1) eine Drucktesteinrichtung (4) umfasst,
- Verbinden der Drucktestvorrichtung (4) mit dem Speicherbehälter (3) der sterilen Baugruppe (3) und gleichzeitiges Unterbrechen von allen weiteren Verbindungen zum Speicherbehälter (3),
- Unterdrucksetzen des sterilen Fluids (31) im Speicherbehälter (3) mittels eines Drucktestmediums (40) der Drucktestvorrichtung für einen vorbestimmten Zeitraum, wobei das Drucktestmedium (40) vor Einströmen in den Speicherbehälter (30) durch ein Filterelement (7) geführt wird und
- Überprüfen der sterilen Baugruppe (3) auf Leckagen.

2. Verfahren nach Anspruch 1, **dadurch gekennzeichnet, dass** das Drucktestmedium (40) ein Gas ist.

3. Verfahren nach einem der vorhergehenden Ansprüche, **dadurch gekennzeichnet, dass** unmittelbar nach Abschluss der Überprüfung der Dichtigkeit ein Dosiervorgang ausgeführt wird, wenn bei der Überprüfung der Dichtigkeit keine Undichtigkeit festgestellt wurde.

4. Verfahren nach einem der vorhergehenden Ansprüche, **dadurch gekennzeichnet, dass** ein auf das sterile Fluid (31) ausgeübtes Druckniveau während der Dichtigkeitsüberprüfung größer ist als ein Druckniveau während eines nachfolgenden Dosiervorgangs.

5. Verfahren nach einem der vorhergehenden Ansprüche, **dadurch gekennzeichnet, dass** der Speicherbehälter (30) ein Beutel ist.

6. Verfahren nach einem der vorhergehenden Ansprüche, **dadurch gekennzeichnet, dass** die sterile Baugruppe (3) ferner einen Verteiler (34) und eine Dosiereinheit mit einer Leitung (35) und einer Nadel (37) umfasst.

7. Dosiervorrichtung zum Dosieren eines sterilen Fluids (31), **gekennzeichnet durch**
- eine Aufnahmevorrichtung (2) zum Aufnehmen einer sterilen Baugruppe (3) mit wenigstens einem Speicherbehälter (30) mit einem Zuströmanschluss (32) und mindestens einem Abgabeanschluss (33), wobei im Speicherbehälter (30) das sterile Fluid (31) angeordnet ist,
- eine Drucktestvorrichtung (4), welche über den Zuströmanschluss (32) mit dem Speicherbehälter (3) verbindbar ist,
- wobei die Drucktestvorrichtung (4) eingerichtet ist, eine Druckprüfung des Speicherbehälters (30) zum Halten eines vorbestimmten Druckniveaus durchzuführen, um einen Dichtigkeitstest der sterilen Baugruppe (3) durchzuführen, und
- ein Filterelement (7) zum Durchführen eines Drucktestmediums (40) vor dem Einströmen in den Speicherbehälter (30).

8. Dosiervorrichtung nach Anspruch 7, **dadurch gekennzeichnet, dass** die sterile Baugruppe (3) ferner einen Verteiler (34) mit einer Vielzahl von Fluidausgängen (38) und eine Vielzahl von Dosiereinheiten mit einer Leitung (35) und einer Nadel (37) umfasst, wobei jeweils eine Dosiereinheit an einem Fluidausgang (38) angeordnet ist.

9. Dosiervorrichtung nach Anspruch 8, ferner umfassend eine Absperreinrichtung (13, 14), welche eingerichtet ist, eine Absperrung an einer Dosiereinheit vorzunehmen.

10. Dosiervorrichtung nach einem der Ansprüche 7 bis 9, **dadurch gekennzeichnet, dass** die Drucktestvorrichtung (4) und ein mit dem Zuströmanschluss (32) verbindbares, mit einem Abfülldruckmedium gefülltes Reservoir (5) in einer gemeinsamen Zuströmleitung (8) münden, welche mit dem Zuströmanschluss (32) am Speicherbehälter (30) verbunden ist.

## Claims

1. Method for checking leak-tightness of a sterile assembly (3) which comprises at least one storage container (30) which is filled with a sterile fluid (31), said container having an inflow port (32) and a discharge port (33), comprising the steps of:
- mounting the sterile assembly (3) in a dosing device (1) for dosing the sterile fluid (31), wherein the dosing device (1) comprises a pressure test device (4),
- connecting the pressure test device (4) to the storage container (3) of the sterile assembly (3) and at the same time interrupting all the further connections to the storage container (3),
pressurizing the sterile fluid (31) in the storage container (3) for a predetermined period of time by means of a pressure test medium (40) of the pressure test device, wherein the pressure test medium (40) is passed through a filter element (7) prior to inflow into the storage container (30), and
- checking the sterile assembly (3) for leaks.

2. Method according to Claim 1, **characterized in that** the pressure test medium (40) is a gas.

3. Method according to either of the preceding claims, **characterized in that** a dosing operation is carried out immediately after completion of the check of the leak-tightness if no leakage was detected during the check of the leak-tightness.

4. Method according to one of the preceding claims, **characterized in that** a level of pressure, exerted on the sterile fluid (31), during the leak-tightness check is larger than a level of pressure during a subsequent dosing operation.

5. Method according to one of the preceding claims, **characterized in that** the storage container (30) is a pouch.

6. Method according to one of the preceding claims, **characterized in that** the sterile assembly (3) also comprises a distributor (34), and a dosing unit having a line (35) and a needle (37).

7. Dosing device for dosing a sterile fluid (31), **characterized by**
- a receiving device (2) for receiving a sterile assembly (3) having at least one storage container (30) which has an inflow port (32) and has at least one discharge port (33), wherein the sterile fluid (31) is arranged in the storage container (30),
- a pressure test device (4) which is able to be connected to the storage container (3) via the inflow port (32),
- wherein the pressure test device (4) is designed to carry out a pressure check of the storage container (30) for the maintenance of a predetermined level of pressure in order to carry out a leak-tightness test of the sterile assembly (3), and
- a filter element (7) for being passed through by a pressure test medium (40) prior to the inflow into the storage container (30).

8. Dosing device according to Claim 7, **characterized in that** the sterile assembly (3) also comprises a distributor (34) having a multiplicity of fluid outlets (38), and a multiplicity of dosing units having a line (35) and a needle (37), wherein in each case one dosing unit is arranged at one fluid outlet (38).

9. Dosing device according to Claim 8, also comprising a shut-off device (13, 14) which is designed to perform a shut-off process at a dosing unit.

10. Dosing device according to one of Claims 7 to 9, **characterized in that** the pressure test device (4) and a reservoir (5) which is able to be connected to the inflow port (32) and which is filled with a filling pressure medium open into a common inflow line (8) which is connected to the inflow port (32) at the storage container (30).

## Revendications

1. Procédé pour vérifier l'étanchéité d'un module stérile (3) qui comprend au moins un récipient de stockage (30) rempli d'un fluide stérile (31) avec un raccord d'alimentation (32) et un raccord de sortie (33), comprenant les étapes suivantes :
- montage du module stérile (3) dans un dispositif de dosage (1) pour le dosage du fluide stérile (31), le dispositif de dosage (1) comprenant un dispositif de test de pression (4),
- connexion du dispositif de test de pression (4) au récipient de stockage (3) du module stérile (3) et interruption simultanée de toutes les autres connexions au récipient de stockage (3),
- mise sous dépression du fluide stérile (31) dans le récipient de stockage (3) au moyen d'un milieu de test de pression (40) du dispositif de test de pression pendant un intervalle de temps prédéterminé, le milieu de test de pression (40) étant guidé avant son afflux dans le récipient de stockage (30) à travers un élément de filtre (7) et
- vérification de l'absence de fuites dans le module stérile (3).

2. Procédé selon la revendication 1, **caractérisé en ce que** le milieu de test de pression (40) est un gaz.

3. Procédé selon l'une quelconque des revendications précédentes, **caractérisé en ce que** toute suite après la vérification de l'étanchéité, une opération de dosage est effectuée si aucun défaut d'étanchéité n'a été constaté lors de la vérification de l'étanchéité.

4. Procédé selon l'une quelconque des revendications précédentes, **caractérisé en ce qu'**un niveau de pression appliqué au fluide stérile (31) pendant la vérification de l'étanchéité est supérieur à un niveau de pression pendant une opération de dosage subséquente.

5. Procédé selon l'une quelconque des revendications précédentes, **caractérisé en ce que** le récipient de stockage (30) est un sachet.

6. Procédé selon l'une quelconque des revendications précédentes, **caractérisé en ce que** le module stérile (3) comprend en outre un distributeur (34) et une unité de dosage avec une conduite (35) et une aiguille (37).

7. Dispositif de dosage pour le dosage d'un fluide stérile (31), **caractérisé par** :
- un dispositif de réception (2) pour recevoir un module stérile (3) avec au moins un récipient de stockage (30) avec un raccord d'alimentation (32) et au moins un raccord de sortie (33), le fluide stérile (31) étant disposés dans le récipient de stockage (30),
- un dispositif de test de pression (4) qui peut être connectés par le biais du raccord d'alimentation (32) au récipient de stockage (3),
- le dispositif de tests de pression (4) étant prévu pour effectuer une vérification de pression du récipient de stockage (30) pour retenir un niveau de pression prédéterminé, afin d'effectuer un test d'étanchéité du module stérile (3), et
- un élément de filtre (7) pour le passage d'un milieu de test de pression (40) avant son afflux dans le récipient de stockage (30).

8. Dispositif de dosage selon la revendication 7, **caractérisé en ce que** le module stérile (3) comprend en outre un distributeur (34) avec une pluralité de sorties de fluide (38) et une pluralité d'unités de dosage avec une conduite (35) et une aiguille (37), une unité de dosage étant à chaque fois disposée au niveau d'une sortie de fluide (38).

9. Dispositif de dosage selon la revendication 8, comprenant en outre un dispositif de blocage (13, 14) qui est prévu pour effectuer un blocage au niveau de l'unité de dosage.

10. Dispositif de dosage selon l'une quelconque des revendications 7 à 9, **caractérisé en ce que** le dispositif de test de pression (4) et un réservoir (5) rempli d'un milieu de pression de remplissage, pouvant être connecté au raccord d'alimentation (32), débouchent dans une conduite d'alimentation commune (8) qui est connectée au raccord d'alimentation (32) au niveau du réservoir de stockage (30).
